# NEUE EUROPÄISCHE PATENTSCHRIFT

(11) **EP 2 168 420 B2**
(45) Veröffentlichungstag und Bekanntmachung des Hinweises auf die Entscheidung über den Einspruch: **01.05.2019**
(45) Hinweis auf die Patenterteilung: 23.11.2011
(21) Anmeldenummer: 09164484.9
(22) Anmeldetag: 03.07.2009
(51) Int. Cl.: A01D 41/127, A01D 43/08

(54) **Landwirtschaftliche Erntemaschine**
Agricultural harvester
Moissonneuse agricole

(30) Priorität: 30.09.2008 DE 102008049575
(43) Veröffentlichungstag der Anmeldung: 31.03.2010
(73) Patentinhaber: CLAAS Selbstfahrende Erntemaschinen GmbH, 33428 Harsewinkel (DE)
(72) Erfinder: Tilly, Thomas, 48231, Warendorf (DE); Pollklas, Manfred, 33378, Rheda-Wiedenbrück (DE); Jeppe, Eckehard, 34289, Zierenberg (DE); Dykstra, Martin, 06917, Jessen/OT Grabo (DE); Erdmann, Hubert, 33739, Bielefeld (DE); Laing, Reinhard, 33428, Harsewinkel (DE)
(74) Vertreter: CLAAS Gruppe

(56) Entgegenhaltungen:
- EP-A1- 1 281 310
- EP-A2- 2 151 156
- DE-A1- 4 115 056
- DE-A1- 19 524 752
- DE-A1- 19 918 552
- DE-A1- 19 921 466
- DE-A1- 19 932 272
- US-A- 4 487 002
- US-A- 4 548 027
- US-A- 4 727 710
- US-A- 4 893 241
- AUERNHAMMER ET AL: "Yield Measurement on Self Propelled Forage Harvesters", ASEA Paper, no. 951757 ,

## Beschreibung

Die Erfindung betrifft eine landwirtschaftliche Erntemaschine mit wenigstens einem Arbeitsorgan zur Bearbeitung des Erntegutes und einer manuellen und einer automatischen Steuereinrichtung, von denen aus über einen steuerbaren Fahrantrieb, die Fahrgeschwindigkeit der Erntemaschine bestimmbar ist, nach dem Oberbegriff des Anspruchs 1.

Aus der EP 1 051 898 A2 ist eine Einrichtung zum Regeln der Vortriebsgeschwindigkeit einer Erntemaschine, insbesondere eines selbstfahrenden Feldhäckslers bekannt, die in Abhängigkeit von der von einer Erntegutaufnahmeeinrichtung aufgenommenen Rate und/oder Menge an Erntegut, die. Vortriebsgeschwindigkeit der Erntemaschine unter Verwendung eines nichtlinearen Reglers automatisch regelt: Ziel ist es, eine gleichmäßige Belastung der Erntemaschine mit Erntegut unter gleichzeitiger Vermeidung von; durch kurzzeitige Durchsatzschwankungen verursachte, sprunghaften Änderungen der Vortriebsgeschwindigkeit Dieses Konzept lässt jedoch völlig außer Acht, dass die von der Erntemaschine verarbeitete Erntegutmenge nicht konstant ist und die Belastung bzw. Überlastung der einzelnen Arbeitsorgane der Erntemaschine entsprechend der Erntegutschwankungen unterschiedlich ausfallen kann.

Bei einer aus der DE-PS-11 99 039 bekannten Erntemaschine wird die einlaufseitige sich über die gesamte Breite des Schrägförderkanals erstreckende Umlenktrommel des Schrägförderers als Messglied einer Messeinrichtung benutzt, um die Durchsatzmenge des Erntegutes zu ermitteln. Bei einer hohen Durchsatzmenge wird diese Anlenktrommel angehoben, wodurch der Abstand zwischen dem fördernden Untertrum des Schrägförderers und dem Boden des Schrägförderkanals vergrößert wird. An einen der seitlichen Rahmenteile des Schrägförderers ist ein Zapfen fest angesetzt, auf den ein Hebel einer Abfülleinrichtung aufgesetzt ist, so dass der Zapfen der Schwenkbewegung des Schrägförderers folgt. Durch eine an den Hebel angeschossene Welle. wird eine hydraulische Steuereinheit betätigt, wodurch die verstellende Scheibe eines stufenlos regelbaren Getriebes des Fahrantriebes so verstellt wird, dass bei einem Anheben der das Messglied bildenden einlaufenden Umlenktrommel die Fahrgeschwindigk der Erntemaschine herabgesetzt und bei einem Absenken der Umlenktrommel die Fahrgeschwindigkeit erhöht wird. Nachteilig an dieser Ausführungsform ist jedoch, dass bei einer Überlastung von dem Schrägförderkanal nachgeordneten Nebenaggregaten kein Eingriff in die manuelle Steuerung der Fahrgeschwindigkeit der Erntemaschine bzw dessen Stoppen vorgenommen wird.

Der Erfindung liegt deshalb die Aufgabe zugrunde, die Nachteile des zitierten Standes der Technik zu vermeiden und eine Erntemaschine der eingangs näher bezeichneten Art so weiterzubilden, dass im Falle einer Überlastung eines Arbeitsorgans die manuelle Steuerung der Fahrgeschwindigkeit durch eine automatische Steuerung der Fahrgeschwindigkeit der Erntemaschine abgelöst wird.

Diese Aufgabe wird erfindungsgemäß durch die: kennzeichnenden Merkmale des Patentanspruchs 1 gelöst wobei in den weiteren Patentansprüchen Merkmale aufgeführt sind, die diese Lösung in vorteilhafter Weise weiterentwickeln.

Indem eine Steuereinrichtung zur automatischen Steuerung der Fahrgeschwindigkeit mit wenigstens einer Messeinrichtung in Wirkverbindung steht und dass beim Oberschreiten einer definierbaren Belastuhgsgrenze wenigstens eines Arbeitsorgans, die manuelle Steuerung der Fahrgeschwindigkeit außer Kraft gesetzt wird, wobei die Steuereinrichtung zur Steuerung der automatischen Fohrgeschwindigkeit derart auf den Fahrantrieb der Erntemaschine einwirkt, dass die landwirtschaftliche Erntemaschine automatisch abgebremst und/oder die Rücknahme wenigstens eines Energiespeichermediums zur Reduzierung der Fahrtgeschwindigkeit erfolgt, ist sichergestellt; dass die Reaktionszeit des Bedieners der Erntemaschine nicht mehr anfällt und die überlastung des wenigstens einen Arbeitsorgans beseitigt werden kann und insbesondere die aufgeschobene Erntegutmenge vor der Erntemaschine deutlich reduzierbar ist. Vorzugsweise ist das wenigstens eine Energiespeichermedium der Kraftstoff zum Betreiben des Antriebsmotors und/oder das Öl zum Betreiben eines hydrostatischen Fahrantriebes der landwirtschaftlichen Erntmaschine.

Vorzugsweise wird die Belastungsgrenze des wenigstens einen Arbeitsorgans von einem in einer Speicher- und Auswerteeinrichtung hinterlegten Belastungsschwellwert gebildet, wobei bei einem Überschreiten des Belastungsschwellwertes eine Überlastung des wenigstens einen Arbeitsorgans vorlegt. Im einfachsten Fall wird der Belastungsschwellwert vom Bediener manuell über eine Eingabeeinheit eingegeben, so dass insbesondere das Wissen von erfahrenen Bedienern bei der Festlegung des Belastungsschwellwertes berücksichtigt werden kann.

In einer vorteilhaften Weiterbildung der Erfindung erfolgt die Bestimmung des Schwellwertes in Abhängigkeit von Erntegut- und/oder Betriebsparametern der Erntemaschine, so dass sichergestellt ist, dass der jeweils optimale Schwellwert für die Belastungsgrenze für das wenigstens eine Arbeitsorgan festgelegt wird Dabei stellen vorteilhaft, insbesondere die Erntegutart, die Erntegutfeucht und die Art der Erntegutaufnahmevorrichtung zu berücksichtigende Ernte- und/oder Betriebsparameter dar.

In einer weiteren Ausgestaltung der Erfindung ist dem wenigstens einen Arbeitsorgan eine Belastungsmesseinrichtung zugeordnet, um eine entsprechende: Überbelastung des wenigstens einen Arbeitsorgans ermitteln zu können. Vorzugsweise ist dabei die Belastungsmesseinrichtung als Drehzahlsensor und/oder Drehmometsensor ausgebildet. Die Nutzung von anderen Vorrichtungen zur Ermittlung einer Überlastung des wenigstens einen Arbeitsorgans liegt im Rahmen der Erfindung.

Gemäß der Erfindung erfolgt die Stärke des Abbremsens der landwirtschaftlichen Erntemaschine und/oder die Festlegung des Wertes der Rücknahme des wenigstens eines Energiespeichermediums zur Reduzierung der Fahrtgeschwindigkeit in Abhängigkeit von der Art des einen Belastungsschwellenwert überschreitenden Arbeitsorgane, so dass je nachdem welches Arbeitsorgan im Erntebetrieb überlastet ist, eine daran angepasste differenziert Fahrgeschwindigkeitsminderung bewirkt werden kann. Vorzugsweise sind die zu überwachenden Arbeitsorgane eine Erntegutaufnahmeinrichtung und/oder eine Nachzerkleinerungseinrichtung und/oder eine Nachbeschleunigungseinrichtung, so dass insbesondere die direkt das erntegutbearbeitenden Arbeitsorgane und dort auftretende Überlastungen berücksichtigt werden.

In einer weiteren vorteilhaften Weiterbildung der Erfindung wird beim Überschreiten des Belastungsschwellwertes des wenigstens einen Arbeitsorgans die Rücknahme der Fahrgeschwindigkeit bzw das Abbremsen der Erntemaschine mittels wenigstens eines Signalmittels, vorzugsweise akustisch und/oder optisch, signalisiert, so dass sichergestellt ist, dass der Bediener der Erntemaschine selbst oder Bediener anderer Fahrzeuge über das Vorliegen einer Überbelastung eines Arbeitsorgans informiert sind.

Damit sichergestellt ist, dass ein der Erntemaschine nachfolgendes Fahrzeug über das Vorliegen einer Überlastung wenigstens eines Arbeitsorgans informiert ist und seibst rechtzeitig einen Bremsvorgang, zur Vermeidung einer Kollision mit der vorausfahrenden Erntemaschine; einleiten kann, ist in einer vorteilhaften Ausgestaltung der Erfindung das Signalmittel die Bremslichteinrichtung der Erntemaschine.

Indem das Abbremsen und/oder die Rücknahme des Energiespeichermediums zeitlich verzögert erfolgt, nachdem das wenigstens eine Arbeitsorgan die Belastungsgrenze überschritten hat, ist sichergestellt, dass den Bedienern von der Erntemaschine nachfolgenden Fahrzeuge genügend Reaktionszeit verbleibt, um selbst einen Bremsvorgang bzw. ein Ausgleichmanöver zu starten, um eine Kollision mit der vorausfahrenden Erntemaschine zu verhindern.

Um den Bediener über die Überbelastung des wenigstens einen Arbeitsorgans zu informieren, wird das einen Belastungsschwellwert überschreitende Arbeitsorgan auf einer in der Fahrerkabine angeordneten Anzeigeneinheit zur Anzeige gebracht. So verbleibt dem Bediener jederzeit noch die Möglichkeit steuernd in den Abbremsvorgang einzugreifen.

Dadurch, dass beim Vorliegen einer überbelastung wenigstens eines Arbeitsorgans, die Erntegutaufnahmevorrichtung, insbesondere eine Pickup, automatisch aus einer bodennahen Arbeits- und Betriebsstellung in eine zumindest teilweise ausgehobene Vorgewendestellung überführt wird, kann insbesondere bei zum Schwaden abgelegtem Erntegut effektiv das Aufstauen des Erntegutes vermieden werden. Zur Verstärkung dieses Effektes erfolgt dabei vorzugsweise gleichzeitig das Abbremsen und/oder die Rücknahme des Energiespeichermediums zur Reduzierung der Fahrgeschwindigkeit der Erntemaschine.

In einer weiteren, vorteilhaften Ausgestaltung der Erfindung wird bei Überschreiten der Belastungsgrenze des wenigstens einen Arbeitsorgans mittels der automatische Steuereinrichtung gleichzeitig das Stoppen der weiteren nicht überlasteten Arbeitsorgane bewirkt, so dass insbesondere beim Vorliegen einer Überlastung eines das Erntegut nachrangig bearbeitenden Arbeitsorgans nicht zusätzlich auch noch die das Erntegut zuvor bearbeitenden Arbeitsorgane überlastet werden und dort Schäden auftreten können.

Weitere vorteilhafte Ausgestaltungen sind Gegenstand weiterer Unteransprüche und werden nachfolgen anhand von einer Zeichnung näher erläutert,

Es zeigt:

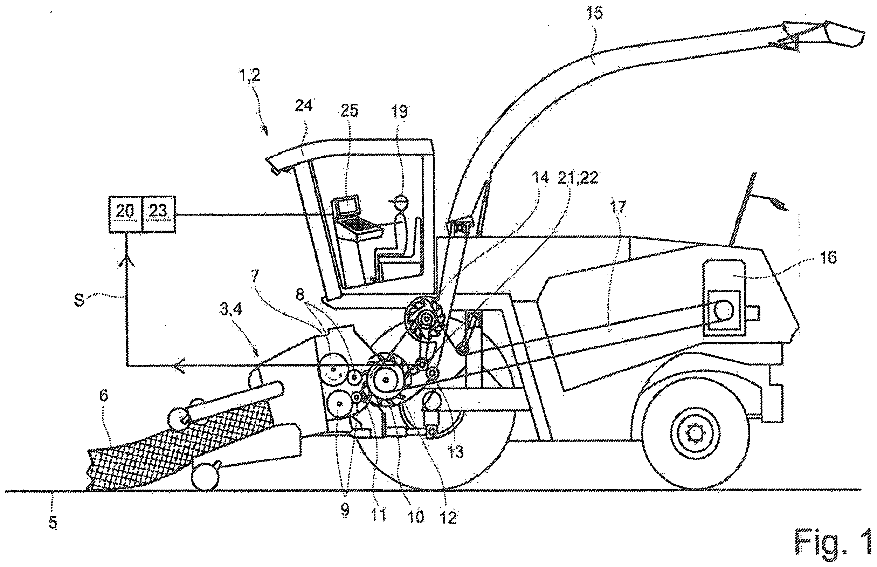

- Figur 1:: eine schematische Darstellung einer landwirtschaftlichen Erntemaschine in Form eines Feldhäckslers mit einer Belasiungsmesseinnchtung und einer Steuereinrichtung zur automatischen Steuerung der Fahrgeschwin- digkeit

Figur 1 zeigt eine landwirtschaftliche Erntemaschine 1 in Form eines Feldhäckslers 2. In Fahrtrichtung FR vorne am Feldhäcksler 2 ist eine als Pickup 3 ausgeführte Ernte gutaufnahmevorrichtung 4 angeordnet. Innerhalb der Pickup 3 wird das vom Feldboden 5 aufgenommene: Erntegut 6 auf die Breite des Einzugsorgans 7 zusammengeführt und dann an das Einzugsorgan 7 übergeben. Das Erntegut 6 wird dann zwischen den im Einzugsorgan 7 angeordneten Einzugswalzen 8, 9 verdichtet und an die nachgeordnete Häckseltrommel 10 zugeführt und über eine Gegenschneide 11 den Häckselmessern 12 der Häckseltrommel 10 zugeführt. An der unmittelbar vor der Häckseltrommel 10 angeordneten Gegenschneide 11 wird das Erntegut 6 von den Häckselmessern 12 zerschnitten und von der der Häckseltrommel 10 nachgeordneten Nachzerkleinerungseinrichtung 13 weiter zerkleinert und vom nachfolgenden Nachbeschieuniger 14 beschleunigt und über einer sich anschließenden Überladevorrichtung 15 aus dem Feldhäcksler 2 gefördert und dabei beispielsweise auf ein hier nicht dargestelltes Transportfahrzeug überladen.

Im Weiteren umfasst die Erntemaschine 1 einen Antriebsmotor 16. welcher über einen gemeinsamen Hauptantriebsriemen 17 die Häckseftrommel 10 und die Nachzerkleinerungseinrichtung 14 und den Nachbeschleuniger 15 und das Einzugsorgan 7 antreibt, die im Weiteren als Arbeitsorgane 10, 14, 15, 4, 7 bezeichnet sind.

Bislang erfolgte beim Vorliegen einer Überlastung eines das Erntegute 5 bearbeitenden Arbeitsorgans 10, 14, 15, 4, 7, insbesondere hervorgerufen durch starke Schwankungen bei der Aufnahme von Erntegut 6, das Reduzieren der Fahrgeschwindigkeit bzw der Stopp der Erntemaschine 1 manuell durch den Bediener 19 selbst, in Abhängigkeit von dessen Reaktionszeit jedoch stets zeitlich verzögert, so dass die Erntemaschine 1 trotz Überlästung eines Arbeitsorgans 10, 14, 15, 4, 7 weiterhin Erntegut 6. mittels der Erntegutaufhahmevorrichtung 4 aufnimmt, so dass es dadurch schlimmstenfalls zu einer Verstopfung der Arbeitsorgane 10, 14, 15, 4, 7 kommt. Das manuelle Reduzieren der Fahrgeschwindigkeit bzw. der Stopp der Erntemaschine 1 erfolgt dabei in an sich bekannter Weise und hier nicht näher dargestellt durch eine entsprechende Bedienung: eines in der Fahrerkabine 24 angeordneten Fahrhebets bzw. durch Betätigung einer Brefnseinnchtung. Je nachdem, wann vom Bediener 19 eine Überbelastung eines Arbeitsorgans 10, 14, 15, 4, 7 erkannt wird, kann das noch zu erntende Erntegut 6 mehrere Meter vor der Erntemaschine 1 hergeschoben werden und zu Aufstauungen von Erntegut 6 und Verstopfungen innerhalb der Erntemaschine führen. Diese Aufstauungen bzw. Verstopfungen sind vom Bediener 19 manuell zu beseitigen, damit nach Beseitigung der Störung die Erntemaschine 1 der Erntebetrieb fortsetzen kann, was jedoch einen erheblichen Zeitverlust für den Erntebetrieb bedeutet.

Hier setzt nun die Erfindung an, die vorsieht, dass beim Vorliegen einer überlastung wenigstens eines das Erntegut bearbeitenden Arbeitsorgane 10, 13, 14, 15, 4, 7 die manuelle Steuerung der Fahrgeschwindigkeit außer Kraft gesetzt wird und mittels einer automatischen Steuereinrichtung 20 zur Steuerung der Fahrgeschwindigkeit derart auf den Fahrantrieb der Erntemaschine 1 einwirkt, dass automatisch die landwirtschaftliche Erntemaschine 1 abgebremst und/oder die Rücknahme wenigstens eines Energiespeichermediums zur Reduzierung der Fahrtgeschwindigkeit erfolgt, um ein Aufstauen von Erntegut 6, wie z.B. von in Schwaden abgelegtes Gras bzw. ein Überfahren und Niederdrücken des noch zu erntenden Erntegutes 6 wie z.B. Mais, vermeiden zu können. Dabei kann das wenigstens eine Energiespeichermedium, wie in Erntemaschinen 1 bekannt und daher nicht näher dargestellt, der Kraftstoff zum Betreiben des Antriebsmotors 17, der die Antriebsieistung für den Fahrantrieb zur Verfügung stellt und/oder das Öl zum Betreiben eines hydrostatischen Fahrantriebs sein. Zur Ermittlung einer Überlastung eines Arbeitsorgans steht die automatische Steuereinrichtung 20 zur Steuerung der Fahrgeschwindigkeit mit wenigstens einer Meßeinrichtung 21, beispielsweise in Form eines Drehmomentsensors 22, welcher hier an der Nachzerkleinerungseinrichtung 13 angeordnet ist, in Wirkverbindung. Vorzugsweise ist dabei der Wert für die Bremswirkung und/oder für die Rücknahme des Energiespeichermediums in Abhängigkeit von der Art des einen Betastungsschwellwert überschreitenden Arbeitsorgans 10, 13, 14 ,15, 4, 7, hier der Nachzerkleinerungseinrichtung 13, einstellbar, so dass je nachdem welches Arbeitsorgan 10, 13, 14, 15, 4, 7 im Erntebetrieb überbelastet ist, eine daran angepasste differenzierte Fahrgeschwindigkeitsminderung bewirkt werden kann. Es liegt im Rahmen der Erfindung, dass mehrere oder sämtliche das Erntegut 5 bearbeitende Arbeitsorgane 10, 13, 14, 15, 4, 7 auf eine überlastung hin überwacht werden. Zur Ermittlung der Überlastung der Nachzerkleinerungseinrichtung 13 steht der Drehmomentsensor 22, mit der Steuereinrichtung 20 zur automatischen Steuerung der Fahrgeschwindigkeit der Erntemaschine 1 in Wirkverbindung.

Vom Bediener 19 ist über eine hier nicht näher dargestellte in der Fahrerkabine angeordnete Eingabevorrichtung ein Drehmomentschwellwert in einer Speicher- und Auswerteeinheit 23 hinterlegbar, dessen Überschreitung, eine Überbelastung der Nachzerkleinerungseinrichtung 13 bedeutet. Vorzugsweise beruht der hinterlegte Belastungsschwellwert auf Expertenwissen, welches beispielsweise durch eine Vielzahl von Testversuche ermittelt worden ist. Wird der hinterlegte Belastungsschweliwert überschritten, wird ein vom Drehmomentsensor 22 generiertes Signal S an die Steuereinrichtung 20 übergeben und von der mit der Steuereinrichtung 20 in Verbindung stehenden Speicher- und Auswerteeinrichtung 23 ausgewertet. Ein von der Steuereinrichtung 20 zur automatischen Steuerung der Fahrgeschwindigkeit generiertes. Signal wird an den nicht näher dargestellten Fahrantrieb der Erntemaschine 1 gesendet, um die automatische Reduzierung der Fahrgeschwindigkeit der Erntemaschine 1, insbesondere durch ein automatisches Abbremsen und/oder durch die Rücknahme des Energiespeichermediums des Fahrantriebes zu bewirken, zumindest solange bis der Drehmomentschwellwert des Drehmomentsensors 22 der Nachzerkleinerungseinrichtung 13 wieder unterschritten ist. Die Steuereinrichtung 20 zur automatischen Steuerung der Fahrgeschwindigkeit dient gleichzeitig als Einstellvorrichtung zur Einstellung des. Wertes, der Bremswirkung und/oder des Wertes für die Rücknahme des Energiespeichermediums, Denkbar ist zudem, dass das Abbremsen und/oder die Rücknahme des Energiespeichermediums zur Reduzierung der Fahrtgeschwindigkeit der Erntemaschine 1 solange erfolgt, bis dass der Stillstand der Erntemaschine 1 erreicht ist.

In einer vorteilhaften Weiterbildung der Erfindung ist vorgesehen, dass der Wert für das Abbremsen und/oder der Wert für die Rücknahme des Energiespeichermediums zur Reduzierung der Fahrgeschwindigkeit der Erntemaschine 1 in Abhängigkeit von der Art des einen Belastungsschwellwert überschreitenden Arbeitsorgans 10, 13, 14, 15, 4, 7 erfolgt. So kann insbesondere die Abbremsstärke und/oder der Wert für die Rücknahme des Energiespeichermediums in Abhängigkeit von der Art des Arbeitsorgans 10, 13, 14, 5, 4, 7 festgelegt werden. Im einfachsten Fall kann vorgesehen sein, dass die Steuereinrichtung 20 zur automatischen Steuerung der Fahrgeschwindigkeit der Erntemaschine 1 im Falle einer sensierten Überbelastung der Nachzerkleinerungseinrichtung 13 automatisch mittels geeigneter hier nicht näher dargestellter Mittel, die nicht dargestellte Fußbremse solange betätigt, bis der Betastüngsschwellwert des Arbeitsorgans 10, 13, 14, 15, 4, 7, hier der Nachzerkieinerungseinrichtung 13 unterschritte ist und damit die Überbelastung des Arbeitsorgane 10, 13, 14, 15, 4, 7 beseitigt ist. Im Weiteren ist denkbar, dass beim Vörtiegen einer Überlastung eines Arbeitsorgans 10, 13, 14, 15, 4, 7 neben dem Abbremsen und/oder der Rücknahme des Energiespeichermediums zur Reduzierung der Fahrtgeschwindigkeit eine Reduktion der Motordrehzahl des Antriebsmotors 17 erfolgt, um so zusätzlich eine Reduktion der Fahrgeschwindigkeit der Erntemaschine 1 erreichen zu können. In einer Ausgestaltung der Erfindung ist vorgesehen, dass das Abbremsen der Erntemaschine 1 und/oder die Rücknahme des Energiespeichermediums in Abhängigkeit vom dem den Belastungsschwellwert überschreitenden Wert erfolgt, so dass eine daran angepasste Reduzierung der Fahrgeschwindigkeit der Erntemaschine 1 erfolgen kann.

Zusätzlich kann beim Vorliegen einer Überlastung des wenigstens einen Arbeitsorgans 10, 13, 14, 15, 4, 7 die Rücknahme der Fahrgeschwindigkeit mittels wenigstens eines hier nicht näher dargestellten Signalmittels akustisch und/oder optisch signalisiert werden, so dass Bediener 19 von hinter der Erntemaschine 1 herfahrenden Fahrzeugen, beispielhaft über das Aufleuchten der an der Erntemaschine 1 angebrachten, hier nicht näher dargestellten Bremslichteinrichtung gewarnt sind, um somit selbst rechtzeitig einen Bremsvorgang einleiten zu können, um eine Kollision mit der Erntemaschine 1 vermeiden zu können.

In einer weiteren Ausführungsform erfolgt beim Vorliegen einer Überlastung des wenigstens einen Arbeitsorgans 10, 13, 14, 15, 7 die Überführung der als Pickup 3 ausgeführten Erntegutaufnahmevorrichtung 4 automatisch aus der hier dargestellten bodennahen Arbeit- und Betriebsstellung in eine nicht dargestellte zumindest teilsweise ausgehobene Vorgewendestellung, so dass sichergestellt ist, dass beispielhaft zum Schwad abgelegtes Erntegut 6, wie z.B. Gras, trotz des nicht ganz zu vermeidenden Weiterfahrens der Erntemaschine 1 nicht aufgestaut wird. Denkbar ist zudem, dass mit dem Überführeh der Erntegutaufnahmevorrichtung 4 aus der Arbeits- und Betriebsstellung in eine zumindest teilweise ausgehobene Vorgewendestellung gleichzeitig die Erntemaschine 1, wie zuvor dargestellt, abgebremst und/oder eine Rücknahme des Energtespeichermediums zur Reduzierung der Fahrgeschwindigkeit erfolgt. Um den Bediener 19 über die Überbelastung des wenigstens einen Arbeitsorgans. 10, 13, 14, 15, 4, 7 zu Informieren, wird das einen Belastungsschwellwert überschreitende Arbeitsorgan 10, 13, 14, 15, 4, 7 auf einer in der Fahrerkabine 24 angeordneten Anzeigeneinheit 25 zur Anzeige gebracht Damit ist der Bediener 19 darüber informiert, dass das wenigstens eine Arbeitsorgan 10, 13, 14, 15, 4, 7 überbelastet ist und hat jederzeit die Möglichkeit steuernd in den durch die Steuereinrichtung 20 zur automatischen Steuerung der Fahrgeschwindigkeit erfolgenden Bremsvorgang der Erntemaschine 1 einzugreifen.

Es liegt im Rahmen des Könnens eines Fachmanns das beschriebene Ausführungsbeispiel in nicht dargestellter Weise abzuwandeln oder in anderen Maschinen einzusetzen, um die beschriebenen Effekte zu erzielen, ohne dabei den Rahmen der Erfindung zu verlassen.

### Bezugszeichenliste:

- 1: Landwirtschaftliche Erntemaschine
- 2: Selbstfahrende Feldhäcksler
- 3: Pickup
- 4: Erntegutaufnahmevorrichtung
- 5: Feldboden
- 6: Erntegut
- 7: Einzugsorgan
- 8: Einzugswalze
- 9: Einzugswalze
- 10: Häckseltrommel
- 11: Gegenschneide
- 12: Häckselmesser
- 13: Nachzerkteinerungseinrichtung
- 14: Nachbeschleuniger
- 15: Überladeeinrichtung
- 16: Antriebsmotor
- 17: Hauptantriebsriemen
- 19: Bediener
- 20: Steuereinrichtung
- 21: Messeinrichtung
- 22: Drehmomentsensor
- 23: Speicher- und Auswerteeinrichtung
- 24: Fahrerkabine
- 25: Anzeigeneinheit
- S: Signal

## Patentansprüche

1. Selbstfahrender Feldhäcksler (2) mit einer Erntegutaufnahmevorrichtung und mit wenigstens einem Arbeitsorgan zur Bearbeitung des Erntegutes und mit einer manuellen und automatischen Steuereinrichtung zur Steuerung der Fahrgeschwindigkeit des Feldhäckslers (2) und wenigstens einer Messeinrichtung zur Ermittlung der Belastung des wenigstens einen Arbeitsorgans,
wobei
die Steuereinrichtung (20) zur automatischen Steuerung der Fahrgeschwindigkeit mit wenigstens einer Messeinrichtung (21) in Wirkverbindung steht und beim Überschreiten einer definierbaren Belastungsgrenze des wenigstens einen Arbeitsorgans (10, 13, 14, 15, 4, 7) die manuelle Steuereinrichtung zur Steuerung der Fahrgeschwindigkeit außer Kraft gesetzt wird, wobei die automatische Steuereinrichtung (20) derart auf den Fahrantrieb einwirkt, dass der Feldhäcksler abgebremst und/oder die Rücknahme wenigstens eines Energiespeichermediums zur Reduzierung der Fahrtgeschwindigkeit erfolgt,
wobei die Stärke des Abbremsens des Feldhäckslers und/oder die Festlegung des Wertes der Rücknahme des wenigstens einen Energiespeichermediums zur Reduzierung der Fahrtgeschwindigkeit in Abhängigkeit von der Art des einen Belastungssschwellwert überschreitenden Arbeitsorgans erfolgt, so dass je nachdem, welches Arbeitsorgan im Erntebetrieb überbelastet ist, eine daran angepasst differenzierte Fahrgeschwindigkeitsminderung bewirkt werden kann.

2. Selbstfahrender Feldhäcksler (2) nach Anspruch 1,
wobei
das wenigstens eine Energiespeichermedium der Kraftstoff zum Betreiben des Antriebsmotors des Feldhäckslers (2) und/oder das Öl zum Betreiben eines hydrostatischen Fahrantriebes ist.

3. Selbstfahrender Feldhäcksler (2) nach Anspruch 1 oder 2,
wobei
die Belastungsgrenze von einem in einer Speicher- und Auswerteeinrichtung (23) hinterlegten Belastungsschwellwert gebildet wird, wobei ein Überschreiten des Belastungsschwellwertes, eine Überlastung des wenigstens einen Arbeitsorgans (10, 30 13, 14, 15, 4, 7) darstellt.

4. Selbstfahrender Feldhäcksler (2) nach wenigstens einem der vorhergehenden Ansprüche, wobei
der Wert für den Belastungsschwellwert wiederabrufbar in der Speicher- und Auswerteeinheit (23) hinterlegbar ist.

5. Selbstfahrender Feldhäcksler (2) nach wenigstens einem der vorhergehenden Ansprüche, wobei
die Bestimmung des Belastungsschwellwertes in Abhängigkeit von Erntegut- und/oder Betriebsparametern des Feldhäckslers (2) erfolgt.

6. Selbstfahrender Feldhäcksler (2) nach wenigstens einem der vorhergehenden Ansprüche, wobei
die Messeinrichtung (21) zur Ermittlung der Belastung des wenigstens einen Arbeitsorgans (10, 13, 14, 15, 4, 7) ein Drehzahl- und/oder ein Drehmomentsensor (23) ist.

7. Selbstfahrender Feldhäcksler (2) nach wenigstens einem der vorhergehenden Ansprüche, wobei
das wenigstens eine Arbeitsorgan (10, 13, 14, 15, 4, 7) eine Erntegutaufnahmeeinrichtung (4) und/oder ein Einzugsorgan (7) und/oder eine Häckseltrommel (10) und/oder eine Nachzerkleinerungsvorrichtung (13) und/oder eine Nachbeschleunigungseinrichtung (14) und/oder eine Überladeeinrichtung (15) ist.

8. Selbstfahrender Feldhäcksler (2) nach wenigstens einem der vorhergehenden Ansprüche, wobei
beim Vorliegen einer Überlastung des wenigstens einen Arbeitsorgans (10, 13, 14, 15, 4, 7) das Abbremsen und/oder die Rücknahme der Fahrgeschwindigkeit mittels eines Signalmittels akustisch und/oder optisch signalisiert wird.

9. Selbstfahrender Feldhäcksler (2) nach wenigstens einem der vorhergehenden Ansprüche, wobei
das wenigstens eine Signalmittel die Bremslichteinrichtung des Feldhäckslers (2) ist.

10. Selbstfahrender Feldhäcksler (2) nach wenigstens einem der vorhergehenden Ansprüche, wobei
das wenigstens eine, einen Belastungsschwellwert überschreitende Arbeitsorgan (10, 13, 14, 15, 4, 7) auf einer in der Fahrerkabine (24) angeordneten Anzeigeneinheit (25) zur Anzeige gebracht wird,

11. Selbstfahrender Feldhäcksler (2) nach wenigstens einem der vorhergehenden Ansprüche, wobei
beim Vorliegen einer Überbelastung des wenigstes einen Arbeitsorgans (10,13, 14, 15, 4, 7) die Erntegutaufnahmevorrichtung (4), insbesondere eine Pickup (3), aus einer bodennahen Arbeits- und Betriebsstellung in eine zumindest teilweise ausgehobene Vorgewendestellung überführt wird.

12. Selbstfahrender Feldhäcksler (2) nach wenigstens einem der vorhergehenden Ansprüche, wobei
mit der Überführung der Erntegutaufnahmevorrichtung (4) aus einer bodennahen Arbeits- und Betriebsstellung in eine zumindest teilweise ausgehobene Vorgewendestellung gleichzeitig das Abbremsen und/oder die Rücknahme der Fahrgeschwindigkeit des Feldhäckslers (2) erfolgt.

13. Selbstfahrender Feldhäcksler (2) nach wenigstens einem der vorhergehenden Ansprüche, wobei
die Überführung des Erntegutaufnahmevorrichtung (4) aus einer bodennahen Arbeits- und Betriebsstellung in eine zumindest teilweise ausgehobene Vorgewendestellung manuell vom Bediener (19) oder automatisch mittels einer Steuereinrichtung (20) erfolgt.

14. Selbstfahrender Feldhäcksler (2) nach wenigstens einem der vorhergehenden Ansprüche, wobei
beim Überschreiten des Belastungsschwellwertes des wenigstens einen Arbeitsorgans (10, 13, 14, 16, 7) automatisch mittels der Steuereinrichtung (20) das Abstoppen von weiteren Arbeitsorganen (10, 13,14,15, 7) bewirkt wird.

## Claims

1. A self-propelled forage harvester (2) having a crop material pickup device and at least one working member for processing the crop material and a manual and automatic control device for controlling the travel speed of the forage harvester (2) and at least one measuring device for ascertaining the loading of the at least one working member,
wherein
the control device (20) for automatic control of the travel speed is operatively connected to at least one measuring device (21) and when a definable load limit of the at least one working member (10, 13, 14, 15, 4, 7) is exceeded, the manual control device for control of the travel speed is taken out of operation, wherein the automatic control device (20) acts on the travel drive in such a way that the forage harvester is braked and/or the reduction of at least one energy storage medium is effected to reduce the travel speed, wherein the braking strength of the forage harvester and/or the determination of the value of the reduction of the at least one energy storage medium is effected to reduce the travel speed in dependence on the type of working member which exceeds a loading threshold value, so that, depending on which working member is overloaded in the harvesting operation, a differentiated travel speed reduction, adapted thereto, can be brought about.

2. A self-propelled forage harvester (2) according to claim 1,
wherein
the at least one energy storage medium is the fuel for operation of the drive engine of the forage harvester (2) and/or the oil for operation of a hydrostatic travel drive.

3. A self-propelled forage harvester (2) according to claim 1 or claim 2,
wherein
the load limit is formed by a loading threshold stored in a storage and evaluation device (23), wherein exceeding the loading threshold value represents overloading of the at least one working member (10, 30 13, 14, 15, 4, 7).

4. A self-propelled forage harvester (2) according to at least one of the preceding claims, wherein
the value for the loading threshold can be stored retrievably in the storage and evaluation unit (23).

5. A self-propelled forage harvester (2) according to at least one of the preceding claims, wherein
the loading threshold is determined in dependence on crop material and/or operating parameters of the forage harvester (2).

6. A self-propelled forage harvester (2) according to at least one of the preceding claims, wherein
the measuring device (21) for ascertaining the loading of the at least one working member (10, 13, 14, 15, 4, 7) is a rotary speed and/or torque sensor (23).

7. A self-propelled forage harvester (2) according to at least one of the preceding claims, wherein
the at least one working member (10, 13, 14, 15, 4, 7) is a crop material pickup device (4) and/or an intake member (7) and/or a chopping drum (10) and/or a post-comminution device (13) and/or a post-acceleration device (14) and/or a transloading device (15).

8. A self-propelled forage harvester (2) according to at least one of the preceding claims, wherein
when there is an overload on the at least one working member (10, 13, 14, 15, 4, 7) braking and/or reduction in the travel speed is acoustically and/or optically signalled by means of a signal means.

9. A self-propelled forage harvester (2) according to at least one of the preceding claims, wherein
the at least one signal means is a brake light device of the forage harvester (2).

10. A self-propelled forage harvester (2) according to at least one of the preceding claims, wherein
the at least one working member (10, 13, 14, 15, 4, 7) which exceeds a loading threshold value is displayed on a display unit (25) arranged in the driving cab (24).

11. A self-propelled forage harvester (2) according to at least one of the preceding claims, wherein
when there is an overload on the at least one working member (10, 13, 14, 15, 4, 7) the crop material pickup device (4), in particular a pickup (3), is moved from a working and operating position near the ground into an at least partially lifted-off foreland position.

12. A self-propelled forage harvester (2) according to at least one of the preceding claims, wherein
with the movement of the crop material pickup device (4) out of a working and operating position near the ground into an at least partially lifted-off foreland position braking and/or reduction in the travel speed of the forage harvester (2) is effected at the same time.

13. A self-propelled forage harvester (2) according to at least one of the preceding claims, wherein
the movement of the crop material pickup device (4) out of a working and operating position near the ground into an at least partially lifted-off foreland position is effected manually by the operator (19) or automatically by means of a control device (20).

14. A self-propelled forage harvester (2) according to at least one of the preceding claims, wherein
when the loading threshold value of the at least one working member (10, 13, 14, 16, 7) is exceeded further working members (10, 13, 14, 15, 7) are stopped automatically by means of the control device (20).

## Revendications

1. Ensileuse automotrice (2) comprenant un dispositif de ramassage de produit de récolte et au moins un organe de travail pour traiter le produit de récolte, et comprenant un équipement de commande manuel et automatique pour commander la vitesse de marche de l'ensileuse (2) et au moins un équipement de mesure pour déterminer la charge du au moins un organe de travail, l'équipement de commande (20) pour la commande automatique de la vitesse de marche étant en liaison active avec au moins un équipement de mesure (21) et, en cas de surpassement d'une limite de charge définissable du au moins un organe de travail (10, 13, 14, 15, 4, 7), l'équipement de commande manuel de commande de la vitesse de marche étant mis hors service, l'équipement de commande automatique (20) agissant sur le groupe propulseur de façon à freiner l'ensileuse et/ou à supprimer au moins un agent d'accumulation d'énergie pour réduire la vitesse de marche, la puissance du freinage de l'ensileuse et/ou la fixation de la valeur de suppression du au moins un agent d'accumulation d'énergie pour réduire la vitesse de marche étant fonction de la nature de la valeur de seuil de charge, ce qui permet, selon l'organe de travail qui est surchargé en cours de récolte, de procéder à une réduction de vitesse de marche avec une différenciation adaptée.

2. Ensileuse automotrice (2) selon la revendication 1, le au moins un agent d'accumulation d'énergie étant le carburant pour alimenter le moteur d'entraînement de l'ensileuse (2) et/ou l'huile pour alimenter une transmission hydrostatique.

3. Ensileuse automotrice (2) selon la revendication 1 ou 2, la limite de charge étant formée par une valeur de seuil de charge enregistrée dans un équipement de mémorisation et d'analyse (23), un surpassement de la valeur de seuil de charge représentant une surcharge du au moins un organe de travail (10, 30, 13, 14, 15, 4, 7).

4. Ensileuse automotrice (2) selon au moins une des revendications précédentes, la valeur pour la valeur de seuil de charge étant enregistrable dans l'unité de commande et d'analyse (23) de manière consultable.

5. Ensileuse automotrice (2) selon au moins une des revendications précédentes, la détermination de la valeur de seuil de charge s'effectuant en fonction de paramètres de produit de récolte et/ou de fonctionnement de l'ensileuse (2).

6. Ensileuse automotrice (2) selon au moins une des revendications précédentes, l'équipement de mesure (21) pour déterminer la charge du au moins un organe de travail (10, 13, 14, 15, 4, 7) étant un capteur de vitesse de rotation et/ou un capteur de couple de rotation (23).

7. Ensileuse automotrice (2) selon au moins une des revendications précédentes, le au moins un organe de travail (10, 13, 14, 15, 4, 7) étant un équipement de ramassage de produit de récolte (4) et/ou un organe d'alimentation (7) et/ou un rotor de hachage (10) et/ou un dispositif de broyage secondaire (13) et/ou un équipement distributeur-accélérateur (14) et/ou un équipement de déchargement (15).

8. Ensileuse automotrice (2) selon au moins une des revendications précédentes, en présence d'une surcharge du au moins un organe de travail (10, 13, 14, 15, 4, 7) le freinage et/ou la suppression de la vitesse de marche étant signalés acoustiquement et/ou optiquement à l'aide d'un moyen de signalement.

9. Ensileuse automotrice (2) selon au moins une des revendications précédentes, le au moins un moyen de signalement étant l'équipement de feux stop de l'ensileuse (2).

10. Ensileuse automotrice (2) selon au moins une des revendications précédentes, le au moins un organe de travail (10, 13, 14, 15, 4, 7) qui surpasse une valeur de seuil de charge étant affiché sur une unité d'affichage (25) disposée dans la cabine de conduite (24).

11. Ensileuse automotrice (2) selon au moins une des revendications précédentes, en présence d'une surcharge du au moins un organe de travail (10, 13, 14, 15, 4, 7) le dispositif de ramassage de produit de récolte (4), en particulier un pickup (3), étant transféré depuis une position de travail et de fonctionnement proche du sol vers une position de tournière au moins en partie relevée.

12. Ensileuse automotrice (2) selon au moins une des revendications précédentes, le transfert du dispositif de ramassage de produit de récolte (4) depuis une position de travail et de fonctionnement proche du sol vers une position de tournière au moins en partie relevée s'accompagnant simultanément du freinage et/ou de la suppression de la vitesse de marche de l'ensileuse (2).

13. Ensileuse automotrice (2) selon au moins une des revendications précédentes, le transfert du dispositif de ramassage de produit de récolte (4) depuis une position de travail et de fonctionnement proche du sol vers une position de tournière étant effectué manuellement par l'utilisateur (19) ou automatiquement au moyen d'un équipement de commande (20).

14. Ensileuse automotrice (2) selon au moins une des revendications précédentes, en cas de surpassement de la valeur de seuil de charge du au moins un organe de travail (10, 13, 14, 16, 7) d'autres organes de travail (10, 13, 14, 15, 7) étant mis à l'arrêt automatiquement au moyen de l'équipement de commande (20).
